Europäisches Patentamt

European Patent Office

Office européen des brevets

(19)

(11) Veröffentlichungsnummer: **0 215 232 B1**

# EUROPÄISCHE PATENTSCHRIFT

(45) Veröffentlichungstag der Patentschrift: 25.09.91

(51) Int. Cl.⁵: **G01L 9/04**, G01L 1/22

(21) Anmeldenummer: 86109866.3

(22) Anmeldetag: 18.07.86

(54) Elektrischer Fühler für Druck- und Kraftmessungen.

(30) Priorität: 11.09.85 DE 3532333

(43) Veröffentlichungstag der Anmeldung:
25.03.87 Patentblatt 87/13

(45) Bekanntmachung des Hinweises auf die
Patenterteilung:
25.09.91 Patentblatt 91/39

(84) Benannte Vertragsstaaten:
DE FR GB IT

(56) Entgegenhaltungen:
DE-A- 3 233 356

(73) Patentinhaber: Degussa Aktiengesellschaft
Weissfrauenstrasse 9
W-6000 Frankfurt am Main 1(DE)

(72) Erfinder: Diehl, Walter, Dr.
Gustav-Adolf-Strasse 29
W-6450 Hanau 1(DE)
Erfinder: Eiermann, Kurt, Dr.
Friedhofstrasse 26
W-6102 Pfungstadt(DE)
Erfinder: Gwinner, Dieter, Dr.
Vosswaldestrasse 7
W-6450 Hanau 9(DE)
Erfinder: Müller, Wolfgang
Nordstrasse 20
W-6456 Langenselbold(DE)

**Beschreibung**

Die Erfindung betrifft einen elektrischen Fühler für Druck- und Kraftmessungen aus einer randfesten, ebenen, elastisch verformbaren Kreismembran mit mindestens vier darauf aufgebrachten, radial und tangential ausgerichteten Dehnungsmeßstreifen, die zu einer Wheatstoneschen Brücke verschaltet sind (DE-A1-32 33 356).

Eine ringsum eingespannte Membran aus elastisch verformbaren Werkstoffen zeigt unter Druckeinwirkung im Zentrum ein Maximum der tangentialen und radialen Dehnung und in der Nähe des Randes eine starke radiale Dehnung umgekehrten Vorzeichens. Die Dehnung ist dabei ein Maß für den Druck bzw. Krafteinwirkung auf die Membran. Eine solche Membran eignet sich daher sehr gut für Druck- bzw. Kraftmessungen mittels Dehnungsmeßstreifen, die auf ihr haftfest aufgebracht sind. Dehnungsmeßstreifen sind elektrische Widerstände, deren elektrischer Widerstandswert sich ändert, wenn sie längs ihrer Leiterbahnen eine Längenänderung erfahren. Das dabei erzielbare Nutzsignal ist allerdings sehr klein, insbesondere im Vergleich zu thermischen Störsignalen, wegen der normalerweise relativ großen Temperaturabhängigkeit des elektrischen Widerstands. Man verwendet daher als Material für diese Dehnungsmeßstreifen meist Metallegierungen mit sehr kleinen Temperaturkoeffizienten des elektrischen Widerstands bzw. mit möglichst stabilen Widerständen im Anwendungstemperaturbereich. Außerdem müssen hochohmige Widerstände möglichst geringer geometrischer Ausdehnung verwendet werden, die auf der Membran gut haften.

Ein elektrischer Fühler für Druck- und Kraftmessungen besteht daher in vielen Fällen aus einer randfesten, elastisch verformbaren Membran, auf der mehrere Dehnungsmeßstreifen haftfest aufgebracht sind. Die Membran formt den Druck bzw. die Kraft, die auf ihr lastet, in eine proportionale Dehnung und der Dehnungsmeßstreifen diese in elektrische Widerstandsänderungen um. Jeweils vier Dehnungsmeßstreifen sind zu einer Wheatstoneschen Brücke verschaltet, wodurch sich die elektrischen Signale empfindlicher auswerten lassen.

Bei der Druck- und Kraftmessung mittels elektrischer Fühler, die Dehnungsmeßstreifen enthalten, treten als wichtigste Störgrößen Temperaturänderungen und Temperaturgradienten an der Membran auf. Aufgrund der Temperaturabhängigkeit der Meßwiderstände führen sie zu Verfälschungen der Brückenausgangsspannung und damit zu Verfälschungen der gemessenen Druckwerte.

Diese Störeinflüsse kann man vermindern durch Auswahl des Widerstandsmaterials und durch schaltungstechnische Massnahmen. Dazu legt man beispielsweise unverformte Korrekturwiderstände parallel zu den Brückenwiderständen und in die Versorgungs- bzw. Ausgangsleitungen. Auch kann man die Temperatur der Membran während der Druckmessung mit einem separaten Temperaturfühler bestimmen und den Druckwert entsprechend korrigieren. Da dieser Temperaturfühler sich im unbelasteten Teil der Membran befinden muß, führt er aber gegebenenfalls zu fehlerhaften Temperaturaussagen am Ort der Dehnungsmeßstreifen.

Üblicherweise sind auf einer ebenen, am Rand eingespannten Kreismembran vier Dehnungsmeßstreifen aufgebracht, wobei zwei Dehnungsmeßstreifen mit radial gerichteten Strombahnen in der Nähe des Randes und zwei Dehnungsmeßstreifen mit tangential gerichteten Strombahnen in der Nähe des Membranmittelpunktes sich befinden. Die Verschaltung in der Wheatstoneschen Brücke erfolgt so, daß jeweils ein Dehnungsmessstreifen mit tangential und radial verlaufenden Strombahnen in benachbarte Brückenzweige geschaltet wird. Die vier Dehnungsmeßstreifen sind zwar in der Nähe der Dehnungsmaxima der Membranoberfläche angeordnet, ihr gegenseitiger räumlicher Abstand führt jedoch zu Temperaturunterschieden, da insbesondere der Membranrand in Verbindung mit dem Fühlergehäuse als Wärmesenke wirkt. Diese lokalen Temperaturunterschiede rufen Brückenverstimmungen hervor, die die Druckmeßwerte verfälschen.

Es war daher Aufgabe der vorliegenden Erfindung, einen elektischen Fühler für Druck- und Kraftmessungen aus einer randfesten, ebenen, elastisch verformbaren Kreismembran mit mindestens vier darauf aufgebrachten, radial und tangential ausgerichteten Dehnungsmeßstreifen, die zu einer Wheatstoneschen Brücke verschaltet sind, zu entwickeln, der möglichst temperaturunempfindlich ist, ohne Verwendung von separaten Temperaturfühlern.

Diese Aufgabe wurde erfindungsgemäß dadurch gelöst, daß die Flächenschwerpunkte aller Dehnungsmeßstreifen mit dem gleichen Abstand a vom Membranmittelpunkt angeordnet sind und der Abstand a = b$\sqrt{2}$•r beträgt, wobei r der Membranradius ist und b Zwischen 0,48 und 0,52 liegt. Die Dehnungsmeßstreifen liegen damit auf einem Kreisring im Abstand a vom Membranmittelpunkt entfernt.

Vorzugsweise beträgt der Abstand a = 0,5•$\sqrt{2}$•r.

Überraschenderweise läßt sich durch diese Anordnung der Dehnungsmeßstreifen die Temperaturabhängigkeit des elektrischen Fühlers minimieren, wenn als Meßgröße für die Fehlerkompensation der Brückeneingangswiderstand herangezogen wird.

Weiterhin ist es vorteilhaft, wenn auf den bevorzugten Kreisring mehr als vier Dehnungsmeßstreifen mit tangential und radial ausgerichteten Strombahnen aufgebracht sind, wobei jeweils mehrere gleichartige Dehnungsmeßstreifen in Serie geschaltet einen der vier Zweige einer Wheatstone'schen Brücke bilden. Dadurch kann man jeweils mehrere Dehnungsmeßstreifen in die einzelnen Zweige der Brücke legen, was den elektrischen Widerstand der einzelnen Zweige erhöht. Außerdem kann man hiermit defekte Dehnungsmeßstreifen eliminieren. Die Höchstzahl der auf einer Membran aufbringbaren Dehnungsmeßstreifen ist begrenzt durch den Abstand a vom Membranmittelpunkt, der Breite eines Dehnungsmeßstreifens und dem Abstand der Dehnungsmeßstreifen voneinander auf dem betreffenden Kreisring. Üblicherweise lassen sich 10 bis 100 Dehnungsmeßstreifen auf einem bevorzugten Kreisring unterbringen.

Außerdem ist es von Vorteil, für die Dehnungsmeßstreifen Legierungen mit sehr kleinen Temperaturkoeffizienten des elektrischen Widerstands zu verwenden. Als günstig erwiesen haben sich hierfür Platin-Ruthenium-Legierungen mit 25 bis 45 Atom% Ruthenium und binäre Iridium-Legierungen mit 40 bis 65 Atom% Platin oder etwa 13 Atom% Molybdän oder 13 bis 18 Atom% Wolfram oder etwa 13 Atom% Chrom oder 40 bis 50 Atom% Rhenium oder 34 bis 39 Atom% Ruthenium. Vorzugsweise verwendet man Dehnungsmeßstreifen aus Iridium-Platin-Legierungen mit 45 bis 55 Atom% Platin.

Anhand der Figuren 1 bis 3 soll ein Ausführungsbeispiel des erfindungsgemäßen elektrischen Fühlers näher beschrieben werden, wobei Figur 1 die Anordnung der Dehnungsmeßstreifen auf einer Membran, Figur 2 die Verschaltung der Dehnungsmeßstreifen in einer Wheatstone'schen Brücke und Figur 3 ein Beispiel für die Strukturierung von vier Dehnungsmeßstreifen zeigt, deren Flächenschwerpunkte auf einem Kreis um den Membranmittelpunkt liegen.

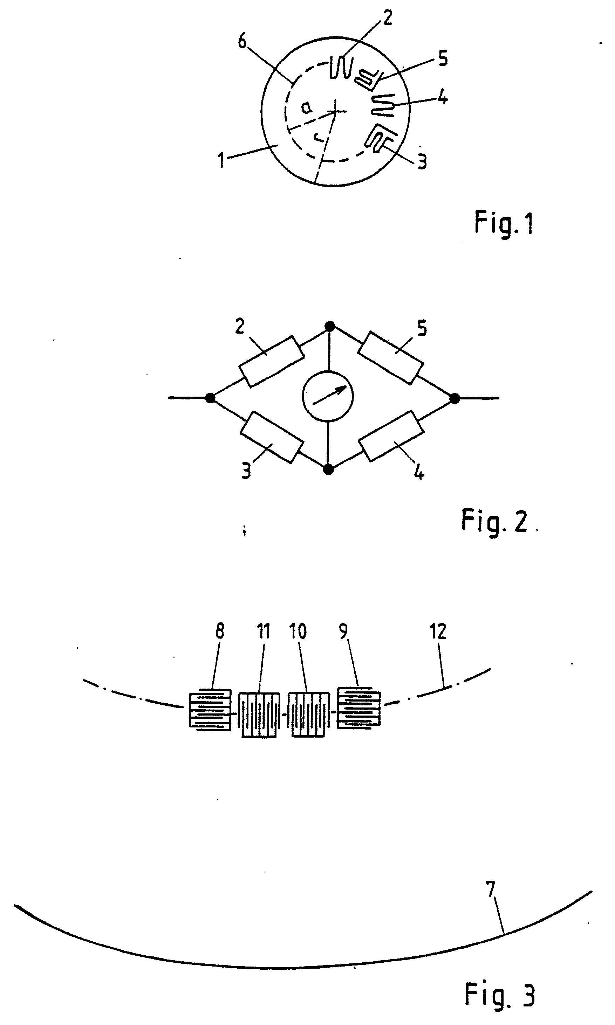

Die Figur 1 zeigt schematisch eine ebene Kreismembran (1), auf der mit gleichem Abstand (a) vom Membranmittelpunkt vier Dehnungsmeßstreifen (2, 3, 4, 5) aufgebracht sind, wobei zwei Dehnungsmeßstreifen (2, 4) radial gerichtete Strombahnen und zwei Dehnungsmeßstreifen (3, 5) tangential gerichtete Strombahnen aufweisen.

In Fig. 2 ist die Verschaltung der Dehnungsmeßstreifen (2 - 5) zu einer Wheatstoneschen Vollbrücke angedeutet. Benachbarte Brückenzweige enthalten jeweils einen radial (2 oder 4) und einen tangential (3 oder 5) dehnbaren Messstreifen.

Die aktiven Flächen der Dehnungsmeßstreifen (2 bis 5) liegen auf einem Kreis (6) mit dem Abstand a um den Membranmittelpunkt. Das Verhältnis von Abstand a zum Membranradius r kann einen Wert zwischen 0,68 und 0,74 annehmen. Dadurch erreicht man, daß die relativen Widerstandsänderungen $\Delta R/R$ der Dehnungsmeßstreifen 2 und 4 entgegengesetzt gleich denen der Dehnungsmeßstreifen 3 und 5 sind. Dabei gilt als Abstand a der Schwerpunkt der stromführenden Fläche des betreffenden Dehnungsmeßstreifens.

Temperaturunterschiede zwischen Zentrum und Membranrand bleiben ohne Auswirkung auf das Brückensignal, da an allen Positionen der Meßstreifen nahezu die gleiche Temperatur herrscht. Temperaturgradienten, die senkrecht zum Radius r gerichtet sind, verursachen ebenfalls nur sehr geringe Brückenfehler, da die Meßstreifen 2 und 5 bzw. 3 und 4 räumlich so dicht beieinander liegen, daß sie annähernd auf gleicher Temperatur sind.

Ein praktisches Ausführungsbeispiel ist in Fig. 3 dargestellt.

Bei den Dehnungsmeßstreifen (8-11) handelt es sich um Widerstandsschichten aus einer Legierung von 50 Gew.% Platin und 50 Gew.% Iridium, die auf eine Aluminiumoxid-Kreismembran (7) aufgestäubt und mittels Laserschneiden in Strombahnen aufgeteilt wurden. Ihre Strombahnen verlaufen innerhalb der Widerstandsflächen geradlinig und parallel zueinander. Im Gegensatz zum Beispiel in Fig. 1 sind die Strombahnen also nur annähernd in radialer Richtung (Dehnungsmeßstreifen 10 und 11) und in tangentialer Richtung (Meßstreifen 8 und 9) orientiert. Die Dehnungsmeßstreifen (8 - 11) liegen auf einem Kreis (12) um den Membranmittelpunkt. Das Abstandsverhältnis, bezogen auf den Membranradius, beträgt 0,73.

Solche elektrischen Fühler für Druck- und Kraftmessungen zeigen nur noch eine minimale Temperaturabhängigkeit, die weit unter der von bekannten elektrischen Fühlern liegt. Die erfindungsgemäßen elektrischen Fühler sind daher auch für Anwendungen bei Temperaturen oberhalb 150 ° C einsetzbar.

**Patentansprüche**

1. Elektrischer Fühler für Druck- und Kraftmessungen aus einer randfesten, ebenen, elastisch verformbaren Kreismembran mit mindestens vier darauf aufgebrachten, radial und tangential ausgerichteten Dehnungsmeßstreifen, die zu einer Wheatstoneschen Brücke verschaltet sind, dadurch gekennzeichnet, daß die Flächenschwerpunkte aller Dehnungsmeßstreifen mit dem gleichen Abstand a vom Membranmittelpunkt angeordnet sind und der Abstand a = $b\sqrt{2} \cdot r$ beträgt, wobei r der Membranradius ist und b zwischen 0,48 und 0,52 liegt.

2. Elektrischer Fühler nach Anspruch 1, dadurch gekennzeichnet, daß der Abstand a = $0{,}5\sqrt{2} \cdot r$ beträgt.

3. Elektrischer Fühler nach Anspruch 1 oder 2, dadurch gekennzeichnet,
daß mehr als vier Dehnungsmeßstreifen mit radial und tangential ausgerichteten Strombahnen im gleichen Abstand zum Membranmittelpunkt aufgebracht sind, wobei jeweils mehrere gleichartige Dehnungsmeßstreifen in Serie geschaltet einen der vier Zweige einer Wheatstone'schen Brücke bilden.

4. Elektrischer Fühler nach einem der Ansprüche 1 bis 3, dadurch gekennzeichnet,
daß als Material für die Dehnungsmeßstreifen Platin-Rutheniumlegierungen mit 25 bis 45 Atom% Ruthenium oder binäre Iridiumlegierungen mit 40 bis 65 Atom% Platin, etwa 13 Atom% Molybdän, 13 bis 18 Atom% Wolfram, etwa 13 Atom% Chrom, 40 bis 50 Atom% Rhenium oder 34 bis 39 Atom% Ruthenium verwendet werden.

## Claims

1. Electric sensor for pressure and force measurements, comprising a planar, elastically deformable circular membrane with firm edges, having at least four radially and tangentially orientated elongation measuring strips arranged thereon and connected to form a Wheatstone bridge, characterised in that the centres of gravity of the surfaces of all the elongation measuring strips are arranged at the same distance a from the centre of the membrane and the distance $a = b\sqrt{2} \cdot r$, where r is the radius of the membrane and b has a value from 0.48 to 0.52.

2. Electric sensor according to Claim 1, characterised in that the distance $a = 0.5\sqrt{2} \cdot r$.

3. Electric sensor according to Claim 1 or Claim 2, characterised in that more than four elongation measuring strips having radially and tangentially orientated current paths are arranged at the same distance from the centre of the membrane, a plurality of identical elongation measuring strips being in each case connected in series to form one of the four branches of a Wheatstone bridge.

4. Electric sensor according to one of the Claims 1 to 3, characterised in that the material used for the elongation measuring strips consist of platinumruthenium alloys containing from 25 to 45 atoms% of ruthenium or binary iridium alloys containing from 40 to 65 atoms% of platinum, about 13 atoms% of molybdenum, from 13 to 18 atoms % of tungsten, about 13 atoms% of chromium, from 40 to 50 atoms% of rhenium or from 34 to 39 atoms% of ruthenium.

## Revendications

1. Détecteur électrique pour mesures de pressions et de forces, composé d'une membrane circulaire plane, fixée sur son pourtour, susceptible de déformation élastique, comportant au moins quatre jauges extensométriques orientées radialement et tangentiellement appliquées sur celle-ci, qui sont raccordées à un pont de Wheatstone, détecteur caractérisé en ce que les centres de surface de toutes les jauges extensométriques sont disposés à la même distance a du
centre de la membrane et la distance $a = b \sqrt{2} \cdot r$, r étant le rayon de la membrane et b étant compris entre 0,48 et 0,52.

2. Détecteur électrique selon la revendication 1, caractérisé en ce que la distance

$$a = 0,5 \sqrt{2} \cdot r.$$

3. Détecteur électrique selon la revendication 1 ou 2, caractérisé en ce que plus de quatre jauges extensométriques à bandes conductrices de courant orientées tangentiellement et radialement sont appliquées à la même distance du centre de la membrane, plusieurs jauges extensométriques de même type, montées en série, formant respectivement l'une des quatre branches d'un pont de Wheatstone.

4. Détecteur électrique selon l'une quelconque des revendications 1 à 3, caractérisé en ce que l'on utilise en tant que matériau pour les jauges extensométriques des alliages de platine et de ruthénium comportant de 25 à 45 % en atomes de ruthénium ou des alliages binaires d'iridium comportant de 40 à 65 % en atomes de platine, environ 13 % en atomes de chrome, de 40 à 50 % en atomes de rhénium ou de 34 à 39 % en atomes de ruthénium.

Fig. 1

Fig. 2

Fig. 3